Europäisches Patentamt

European Patent Office

Office européen des brevets

(19)

(11) Veröffentlichungsnummer: **0 137 136**
**B1**

(12) **EUROPÄISCHE PATENTSCHRIFT**

(45) Veröffentlichungstag der Patentschrift:
**27.09.89**

(21) Anmeldenummer: **84108059.1**

(22) Anmeldetag: **10.07.84**

(51) Int. Cl.⁴: **B 01 F 7/26**

(54) Haushaltsgerätewerkzeug, insbesondere für Küchenmaschinen.

(30) Priorität: **24.09.83 DE 3334637**

(43) Veröffentlichungstag der Anmeldung:
**17.04.85 Patentblatt 85/16**

(45) Bekanntmachung des Hinweises auf die Patenterteilung:
**27.09.89 Patentblatt 89/39**

(84) Benannte Vertragsstaaten:
**DE FR GB IT**

(56) Entgegenhaltungen:
**DD-A- 45 825**
**DE-C- 707 300**
**DE-C- 835 881**
**DE-U- 6 908 643**
**DE-U- 7 124 283**
**US-A- 2 743 914**

(73) Patentinhaber: **ROBERT KRUPS STIFTUNG & CO. KG.,**
**Heresbachstrasse 29, D-5650 Solingen 19 (DE)**

(72) Erfinder: **Fühner, Hubert, Locher Kotten 51,**
**D-5650 Solingen 19 (DE)**
Erfinder: **Henn, Stefan, Dipl.-Ing., Wieden 29,**
**D-5650 Solingen 1 (DE)**

(74) Vertreter: **Buse, Karl Georg, Dipl.-Phys. et al,**
**Patentanwälte Dipl.-Phys. Buse Dipl.-Phys. Mentzel**
**Dipl.-Ing. Ludewig Unterdörnen 114 Postfach 20 02 10,**
**D-5600 Wuppertal 2 (DE)**

**Beschreibung**

Die Erfindung betrifft eine Küchenmaschine mit einem Aufnahmebehälter, in dem ein Haushaltswerkzeug in Form einer eine Mitnehmernabe aufweisenden Scheibe drehbar angeordnet ist zum Bereiten von Schlagsahne, Eischnee, Majonnaise und dergl., wobei diese Scheibe dicht über den Behälterboden angeordnet ist, von etwa ihrem mittleren Bereich ausgehende, zum Scheibenumfang gerichtete Luftleitkanäle aufweist, die im mittleren Scheibenbereich mit Lufteinlaßöffnungen und am Umfangsbereich mit Luftauslaßöffnungen versehen sind und daß die Scheibe auf ihrer Unterseite die Luftleitkanäle zwischen sich einschließende Rippen aufweist und der Behälterboden quasi eine Begrenzungsseite der Luftleitkanäle bildet.

Durch die DE-C 707 300 ist eine derartige Vorrichtung bekanntgeworden, die zum Mischen von flüssigem, breiigem, pulverförmigem oder ähnlichen Gut unter Nutzbarmachung der Zentrifugalkraft dient. Diese bekannte Vorrichtung weist somit eine sich dicht oberhalb des Bodens des Mischgefäßes drehende Zentrifugalscheibe auf, die als flacher Ring gestaltet ist, an dessen Unterseite sich radial gerichtete Rippen befinden. Es ist eine Verbindung der im Querschnitt turbinenschaufelartig gekrümmten, oberhalb der Ringebene liegenden Speichen mit der Nabe vorgesehen. Dabei wird eine Nabe benutzt, die als kegelartiger Wulst gestaltet ist, der sich in der Höhe der Rippen zu einem Flansch erweitert. Durch die turbinenschaufelartigen Querschnitt aufweisenden Speichen soll erreicht werden, daß das darüberstehende Gut kräftig nach unten gesaugt wird. Die Nabe hat den als Spritzring dienenden Wulst, um das ihm von oben durch die Speichen zugeführte Gut nach außen gegen die Rippen zu schleudern. Unterhalb des Ringes soll sich in der Nähe der Nabe ein luftverdünnter Raum bilden, der ein Herunterfließen des Gutes entlang der Antriebswelle verhindern soll.

Bei einer anderen Ausführungsform dieser bekannten Vorrichtung ist dagegen vorgesehen, das sich bildende Vakuum zu benutzen, um gasförmige, flüssige oder pulverförmige Bestandteile durch eine externe, unterhalb des Bodens des Mischbehälters angeordnete Leitung anzusaugen, um es nach und nach dem Mischprozeß zuzuführen. Um dieses zu ermöglichen, ist im Boden des Behälters eine Öffnung vorgesehen, die auch dazu benutzt werden kann, das fertig gemischte Gut durch eine zweite Leitung abzuführen. Zwischen den beiden Leitungen ist ein Dreiwegehahn vorgesehen.

Eine Bearbeitung des Gutes im Bereich zwischen der äußeren Umfangsfläche des Ringes und der Behälterwandung findet praktisch nicht statt wegen des sehr großen Abstandes dieser beiden Teile zueinander. Ein großer Teil des Gutes bleibt in dem genannten Bereich liegen, ohne bearbeitet zu werden.

Durch die DE-U-6 908 643 ist ein Stabmixer mit Frischluftbelüftung bekanntgeworden. Dieser bekannte Stabmixer hat ein aufsteckbares Kreiselgebläse, welches unter der Flüssigkeitsoberfläche rotiert, Frischluft durch eine hohle Antriebswelle ansaugt und am Umfang des Kreiselgebläses unter Druck wieder freigibt. Diese bekannte Vorrichtung setzt somit für ihr Wirksamwerden voraus, daß das Mixgerät tief unter der zu mixenden Flüssigkeitsoberfläche zur Wirkung kommt. Mit diesem bekannten Stabmixer ist ein kontrolliertes und genau wiederholbares Arbeiten überhaupt nicht möglich und zwar deshalb nicht, weil dieses Arbeitswerkzeug von dem Benutzer in der von ihm gewünschten Weise in die zu bearbeitende Flüssigkeit eingebracht wird. Es kann sich dabei sowohl die Eintauchtiefe als auch die Eintauchrichtung stets ändern. Das Einhalten einer stets gleichen Arbeitsstellung ist somit nicht gewährleistet.

Es sind auch Küchenmaschinen bekannt, die einen Gehäusefuß aufweisen, auf den ein fest angeordneter Behälter aufsitzt. Aus dem Boden dieses Behälters ragt eine von einem Antriebsmotor in Drehung versetzbare Kupplungswelle vor, mit welcher bedarfsweise unterschiedliche rotierende Gerätewerkzeuge kuppelbar sind. Bei derartigen Küchenmaschinen lassen sich die Gerätewerkzeuge, wie Rührwerkzeuge, Schneidwerkzeuge oder auch Knetwerkzeuge untereinander mühelos austauschen.

Außer diesen Küchenmaschinen sind auch andere Ausführungsformen bekannt, auf deren eine Mitnehmerkupplung aufweisenden Motorsockel ein Behälter aufsetzbar ist. Zu derartigen Geräten gehören verschiedene Behälter, die jeweils ein dem jeweiligen Behälter speziell zugeordnetes Werkzeug enthalten, welches beim Aufsetzen des Behälters auf dem Motorsockel mit der rotierenden Antriebswelle der Küchenmaschine in Eingriff kommt. Auch bei einer derartigen Küchenmaschine ist es möglich, Rührwerkzeuge, Schneidwerkzeuge oder auch Knetwerkzeuge und dergl. einzusetzen, in dem ein ein derartiges Werkzeug enthaltender Behälter auf dem Motorsockel aufgesetzt wird.

Die Werkzeuge bestehen in der Regel aus einem rotierenden Werkzeugkern und mehreren, wenigstens jedoch zwei in diametral entgegengesetzter Richtung vom Werkzeugkern ausgehenden Messerflügel, die gegebenenfalls in unterschiedlicher Höhe vom Behälterboden angeordnet sein können und gegebenenfalls auch Schlagnocken aufweisen. Derartige Werkzeuge sind zum Zerkleinern, Rühren od. dgl. geeignet. Zum Zubereiten von Schlagsahne, Eischnee, Majonnaise od. dgl. sind derartige Werkzeuge jedoch nur mit Vorbehalt zu verwenden, da selbst bei Vorliegen eines relativ großen Volumens des Füllgutes kein optimales Ergebnis erzielt werden kann. Bei in geringen Mengen zuzubereitender Schlagsahne, Eischnee, Majonnaise od. dgl. ist das Ergebnis bei der Zubereitung mit den bekannten Werkzeugen sogar völlig unbefriedigend. Man hat zwar versucht, durch Getriebe oder elektrische Regelungen die Umlaufgeschwindigkeit des Werkzeuges stark herabzusetzen. Hierdurch werden einerseits die dazu zu benutzenden untersetzenden Getriebe oder auch elektronische Regelungen erforderlich, die die Herstellungskosten solcher Küchenmaschinen in einem kaum vertretbaren Umfange vergrößern. Trotzdem ist das mit ihnen erreichte Ziel bei der Zubereitung von geringen Mengen Schlagsahne, Eischnee oder Majonnaise unbefriedigend, wenn nicht gar ungenügend.

Aufgabe der vorliegenden Erfindung ist es, eine Küchenmaschine der eingangs näher gekennzeichneten Art zu schaffen, mit der selbst geringe Mengen Schlagsahne, Eischnee, Majonnaise od. dgl. zubereitet werden können, ohne daß die Verwendung elektronischer Regeleinrichtungen oder stark untersetzter Getriebe erforderlich ist.

Dieses Ziel ist erfindungsgemäß dadurch erreicht, daß der Außendurchmesser der Scheibe etwas kleiner als der Innendurchmesser des Aufnahmebehälters ist und zwischen Scheibe und Seitenwandung des Aufnahmebehälters ein Ringspalt gebildet ist. Durch die erfindungsgemäße Ausbildung einer Küchenmaschine ergeben sich im Vergleich mit dem Bekannten erhebliche Vorteile. Außer einem Rühreffekt gelingt es, mit einer derartigen Scheibe die sahnige Konsistenz des Rührgutes durch Verteilung feinster Luftbläschen im Rührgut zu erzielen. Dabei wird durch die Drehung der Scheibe das Rührgut infolge der Fliehkraft im Eck-Ring-Bereich des Behälterbodens wulstartig angeordnet und mit feinsten Luftbläschen durchsetzt. Durch diese intensive Arbeitsweise der Scheibe ist die benötigte Zeit – selbst zur Herstellung größerer Mengen von Schlagsahne, Eischnee, Majonnaise od.dgl. – gering. Da zwischen dem Außendurchmesser der Scheibe und der benachbarten Wand des Aufnahmebehälters nur ein Ringspalt vorhanden ist, entstehen keine toten Räume für das zu bearbeitende Gut.

Zur Erzielung einer guten Durchmischung mag es vorteilhaft sein, wenn die Scheibe im bezug auf die zur Längsachse der Mitnehmernabe senkrechte Ebene geneigt dazu angeordnet ist, so daß eine taumelnde Bewegung der Scheibe im Rührgut erfolgt. Statt einer geneigten Anordnung der Scheibe ist es auch denkbar, nur einen Teilbereich der Scheibe geringfügig nach oben anzuwinkeln, so daß der gleiche Effekt entsteht.

Bei der Verwendung der erfindungsgemäßen Scheibe besteht ein weiterer Vorteil darin, daß diese einen einfachen Aufbau aufweist und beispielsweise einstückig aus Kunststoff hergestellt sein kann. Es kann ferner auf eine die Küchenmaschine verteuernde Drehzahlregelung mechanischer oder elektronischer Art verzichtet werden. Trotzdem wird eine saubere Arbeitsmethode erzielt, da es bei der Arbeit mit der erfindungsgemäßen Scheibe nicht zum Spritzen des Rührgutes kommt.

Eine Ausführungsform der Scheibe sieht vor, die Lufteinlaßöffnungen als glatte, in der Ebene der Scheibe liegende Durchbrüche auszubilden. Eine solche Scheibe läßt sich einfach und damit wirtschaftlich herstellen. Durchgeführte Versuche haben ergeben, daß hierbei die Wirksamkeit der Scheibe nicht beeinträchtigt wird.

Es ist zweckmäßig, die als glatte Durchbrüche der Scheibe ausgebildeten Lufteinlaßöffnungen zwischen den Rippen anzuordnen, die die Scheibe auf ihrer Unterseite aufweist. Dabei bilden auch in diesem Fall der Behälterboden die eine Begrenzungsseite der Luftleitkanäle.

Hinsichtlich der Ausbildung derjenigen Lufteinlaßöffnungen der Scheibe, die als glatte, in der Ebene der Scheibe liegende Durchbrüche ausgebildet sind, ergeben sich mehrere Möglichkeiten. So kann man jedem dieser Durchbrüche eine quadratische, rechteckige oder allgemein gesprochen auch eine mehreckige Ausbildung geben. Daneben können aber auch runde oder unrunde Durchbrüche eingesetzt werden. Auch hinsichtlich der Anzahl der einzusetzenden glatten Durchbrüche gibt es Variationsmöglichkeiten. Im Grenzfall liegt zwischen je zwei Rippen der Scheibe jeweils ein glatter Durchbruch. In vielen Fällen genügt es jedoch auch, wenn die Anzahl der glatten Durchbrüche der Scheibe geringer ist als die Anzahl der Rippen der Scheibe.

Nach einem anderen Vorschlag der Erfindung sind den Lufteinlaßöffnungen der Scheibe Luftführungen zugeschaltet. Bei dieser Ausführungsform wird somit auf Durchbrüche in der Scheibe selbst verzichtet. Bei der bevorzugten Ausführungsform der Erfindung werden die Luftführungen zunächst gebildet durch einen mit der Atmosphäre in Verbindung stehendem Zwischenraum zwischen dem Boden des Aufnahmebehälters und der Decke eines Gehäusefußes. An einen solchen Zwischenraum schließt sich dann als Führung ein Ringraum an, der zwischen der Innenwandung eines hülsenartigen Vorsprunges des Bodens und Bereichen eines Adapters gebildet wird. Die Führung wird dann ergänzt durch einen weiteren Ringraum, der gebildet wird zwischen den Außenwandungen des hülsenartigen Vorsprunges und Bereichen der Innenwand des schon erwähnten Adapters. Dabei ist letzterer abnehmbar auf einer fest auf der Arbeitswelle des motorischen Antriebes sitzenden Isolierhülse angeordnet, und er hat auf einem Teilbereich seiner Umfangsfläche Gegenkupplungen, die mit Kupplungen der Mitnehmernabe der Scheibe zusammenwirken. Dieser Zwischenraum sowie erster und zweiter Ringraum bilden eine sich ergänzende Führung für die Luft, die von der Unterseite des Bodens des Aufnahmebehälters herkommend in den Ringraum zwischen den Vorsprung des Bodens und den Adapter geführt ist und dann unter Umkehr um 180° in einen weiteren Ringraum geführt wird, an dessen Austrittsende die Einlaßöffnungen für die Luftleitkanäle liegen. Diese werden dann beim bestimmungsgemäßen Gebrauch durchströmt, wobei die Luft dann aus den Luftaustrittsöffnungen hindurchtritt und in den gewünschten innigen Kontakt mit dem Rührgut kommt.

Bei dieser vorteilhaften Ausführungsform ist die einstückige Scheibe auf ihrer dem Behälterboden abgekehrten Seite glattwandig, während sie auf der gegenüberliegenden anderen Seite zweckmäßig drei untereinander gleichgestaltete und gleichen Abstand voneinander aufweisende Rippen trägt, die an ihrem inneren Ende in die Mitnehmernaben übergehen. Zwar wäre es auch bei dieser Ausführungsform grundsätzlich möglich, die Anzahl der vorhandenen Rippen zu variieren, beispielsweise zu erhöhen, jedoch haben durchgeführte Versuche ergeben, daß die erwähnten drei Rippen vollauf genügen, um den erstrebten Erfolg zu erzielen.

Zweckmäßig ist es, daß in Draufsicht gesehen die Kupplungsvorsprünge der Isolierhülse und die Gegenkupplungen des Adapters eine wellen- oder zahnradförmige, sich zu einem Kreis ergänzende Fläche einschließen, wobei in die Wellentäler bzw. Zahnlücken die Gegenkupplungen des inneren Teilstückes des Adapters bzw. die Kupplungen der Scheibe formschlüssig eingreifen. Diese Kupplungen und Gegenkupplungen haben sich bei den durchgeführten Versuchen sehr gut bewährt.

Dabei empfiehlt es sich, daß in den Zwischenraum zwischen dem Boden des Aufnahmebehälters und der Decke des Gehäusefußes ein scheibenartiger Fuß der Isolierhülse hineinragt und daß die Luftführung über die Umfangsfläche des Fußes in den Ringraum erfolgt. Der scheibenartige Fuß der Isolierhülse hat zusätzlich die Wirkung, daß etwa in den Zwischenraum gelangte Flüssigkeit nach außen geschleudert wird.

Auf der Zeichnung ist die Erfindung in mehreren Ausführungsbeispielen dargestellt und zwar zeigen:

Fig. 1 eine Küchenmaschine, deren Gehäusefuß einen fest damit verbundenen Behälter aufweist, in den eine erste Ausführungsform des erfindungsgemäßen Werkzeugelementes eingesetzt ist,

Fig. 2 das erfindungsgemäße, eine Mitnehmernabe aufweisende, unmittelbar über dem Behälterboden angeordnete Gerätewerkzeug mit einer aus der Scheibe nach oben aufragenden Mitnehmernabe in einer teilweise aufgebrochenen Seitenansicht,

Fig. 3 das aus Fig. 2 ersichtliche Werkzeugelement in einer Unteransicht in Richtung des Pfeiles III der Fig. 2,

Fig. 4 das aus der Fig. 2 ersichtliche Werkzeugelement in einer Draufsicht in Richtung des Pfeiles IV der Fig. 2 aus gesehen,

Fig. 5 die Lufteinlaßöffnungen des Werkzeugelementes nach den Fig. 3 und 4 in einem Schnitt nach der Linie V–V der Fig. 4, teilweise weggebrochen und im größeren Maßstab,

Fig. 6 ein zweites Ausführungsbeispiel des erfindungsgemäßen Haushaltsgerätewerkzeuges, bei dem die Lufteinlaßöffnungen durch einen aufgewölbten, die Mitnehmernabe mit Abstand umfassenden Rohrschaft gebildet ist,

Fig. 7 den über Axialschaufeln bildende Rippen mit der Mitnehmernabe verbundenen Rohrschaft in einem Querschnitt nach der Linie VII–VII der Fig. 6,

Fig. 8 den die Axialschaufeln umfassenden Bereich des Rohrschaftes in einem Längsschnitt nach der Linie VIII–VIII der Fig. 7,

Fig. 9 eine andere Ausführungsform eines elektrisch betriebenen Gerätes für die Bearbeitung und Zubereitung von Nahrungsmitteln in Vorderansicht, teilweise geschnitten, mit einer dritten Ausführungsform des erfindungsgemäß ausgebildeten Werkzeugelementes,

Fig. 10 im vergrößerten Maßstab einen Teilschnitt durch das elektrisch betriebene Gerät für die Bearbeitung und Zubereitung von Nahrungsmitteln nach der Fig. 9, teilweise weggebrochen,

Fig. 11 eine Unteransicht auf das Werkzeugelement, welches in die Küchenmaschine nach den Fig. 9 und 10 eingesetzt ist,

Fig. 12 einen Längsschnitt durch das Werkzeugelement gemäß der Fig. 11 der Zeichnung,

Fig. 13 eine vierte Ausführungsform des erfindungsgemäßen Werkzeugelementes in einer Unteransicht,

Fig. 14 die Ausführungsform des Werkzeugelementes nach der Fig. 13 in einer Draufsicht,

Fig. 15 einen Schnitt entlang der Linie XV–XV der Fig. 14, teilweise weggebrochen und im vergrößerten Maßstab,

Fig. 16 einen für das elektrisch betriebene Gerät gemäss den Fig. 9 und 10 bestimmten Adapter mit einer lösbar damit verbundenen Sahnescheibe, teilweise in Seitenansicht, teilweise im Schnitt und

Fig. 17 eine Draufsicht auf die Sahnescheibe gemäß der Fig. 16, jedoch im verkleinerten Maßstab.

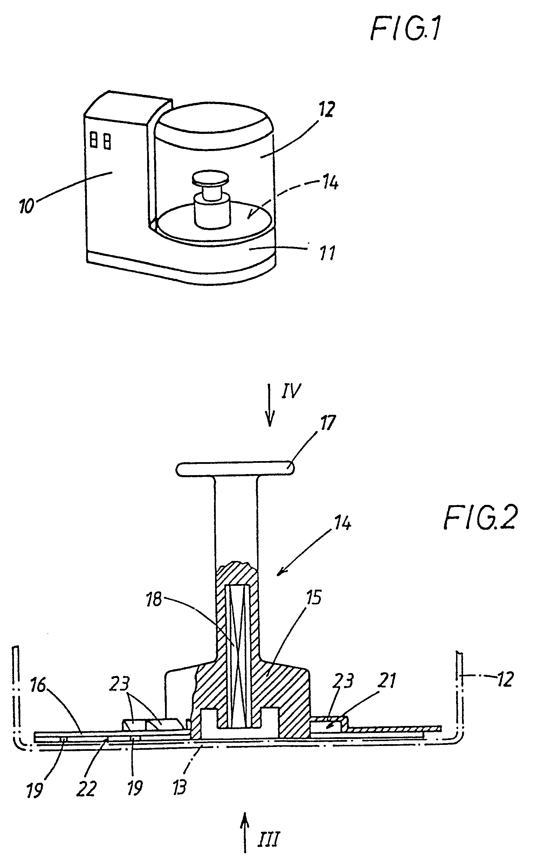

Eine mit einer ersten Ausführungsform des erfindungsgemäßen Haushaltsgerätewerkzeuges ausgestattete und nur beispielsweise verwendete Küchenmaschine ist in der Fig. 1 der Zeichnung dargestellt. Bei dieser Küchenmaschine weist das außer Steuerungsteilen und Übertragungsgliedern einen Elektromotor aufnehmende Gehäuse 10 einen Gehäusefuß 11 auf, auf dem ein Aufnahmebehälter 12 aufsitzt, der einen in den Gehäusefuß 11 integrierten Bestandteil darstellt. Der Behälterboden 13 ist in seinem Zentrum von einer nicht dargestellten, in den beispielsweise durchsichtigen Aufnahmebehälter 12 vorragenden Kupplungswelle durchgriffen, auf die von oben her unterschiedliche Haushaltsgerätewerkzeuge im Austausch aufgesteckt werden können.

Das insbesondere aus den Fig. 2 bis 4 der Zeichnung ersichtliche Haushaltsgerätewerkzeug 14 besteht im wesentlichen aus einer Mitnehmernabe 15 und einer zu dessen Längsachse in senkrechter Ebene angeordneten, ein Werkzeugelement darstellenden Scheibe 16. Dabei ist die Scheibe 16 am unteren Ende der Mitnehmernabe 15 angeordnet, während das obere Ende dieser Mitnehmernabe 15 eine Handhabe 17 aufweist. Diese Handhabe 17 hat bei den dargestellten Ausführungsbeispielen die Form einer Scheibe, könnte jedoch auch beispielsweise von Anflachungen, Griffmulden od. dgl. gebildet sein. Im unteren Bereich der Mitnehmernabe 15 ist eine unrunde Mitnehmerbohrung 18 angeordnet, welche auf die zuvor erwähnte, nicht dargestellte Mitnehmerwelle der Küchenmaschine paßt. Unterhalb der Scheibe 16 – ausgehend vom Umfangsbereich der Mitnehmernabe 15 – befinden sich sternförmig angeordnete Rippen 19, die zwischen sich Luftleitkanäle 20 einschließen, deren untere Seitenwand beim bestimmungsgemäßen Gebrauch des Haushaltsgerätewerkzeuges vom Behälterboden 13 gebildet wird, über welchen sich die Rippen 19 mit geringem Abstand befinden. Diesen Luftleitkanälen 20 sind im Bereich der Mitnehmernabe 15 Lufteinlaßöffnungen 21 zugeordnet, während die Luftauslaßöffnungen 22 durch den am Umfangsbereich der Scheibe 16 zwischen zwei benachbarten Rippen 19 vorhandenen Freiraum gebildet werden.

Bei dem aus den Fig. 2 bis 4 ersichtlichen Ausführungsbeispiel sind die Lufteinlaßöffnungen 21 durch taschenartig nach oben aufgewölbte Wandteile 23 gebildet, wobei jedem Luftleitkanal 20 ein die Lufteinlaßöffnung 21 bildender Wandteil 23 zugeordnet ist, wobei sich die Breite der Lufteinlaßöffnung durch den sich in radialer Richtung bereichsweise an die Mitnehmernabe 15 anschließenden Wandteil 23 ergibt, der sich vom Oberende der Lufteinlaßöffnung 21 ausgehend zur Ebene der Scheibe hin neigend erstreckt.

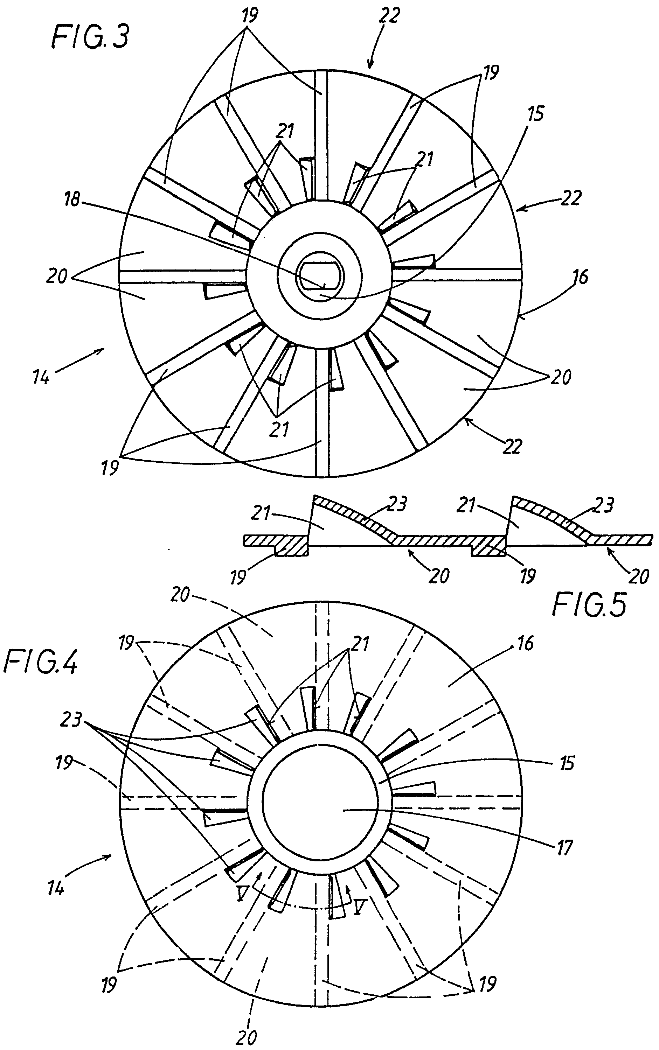

Beim bestimmungsgemäßen Gebrauch des aus den Fig. 2 bis 5 der Zeichnung ersichtlichen Haushaltsgerätewerkzeuges wird das Arbeitsgut infolge der Fliehkraft nach außen gedrängt, so daß die Lufteinlaßöffnungen 21 frei bleiben und bei Drehung der in Fig. 4 dargestellten Scheibe im Uhrzeigersinn Luft in die Einlaßöffnungen 21 gedrückt wird, die dann durch die Luftleitkanäle 20 zum Ringspalt hin zwischen der Seitenwandung des Aufnahmebehälters 12 und der Scheibe 16 gedrückt wird und dort in das Rührgut eintreten kann.

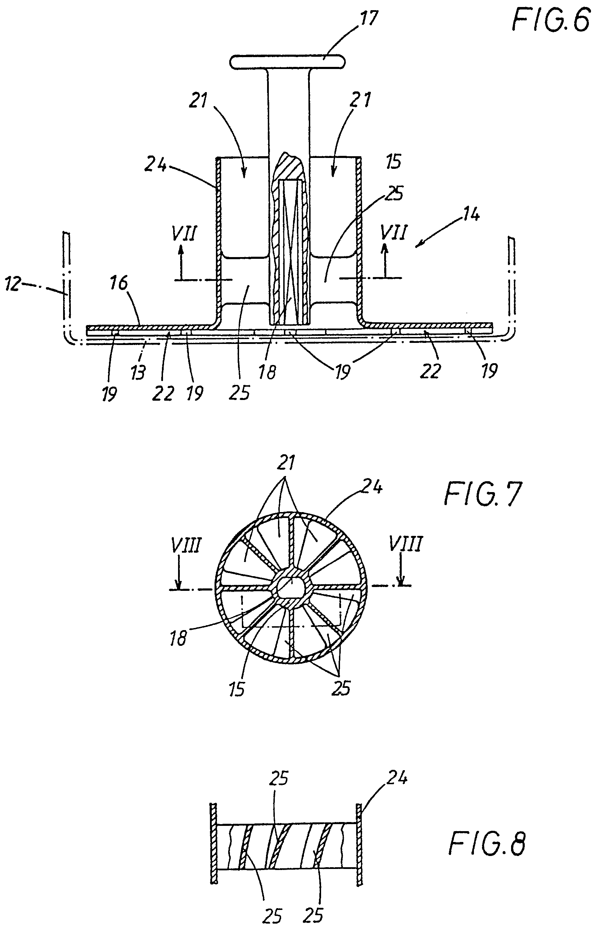

Bei dem aus den Fig. 6 bis 8 ersichtlichen Ausführungsbeispiel eines Haushaltsgerätewerkzeuges befinden sich die Lufteinlaßöffnungen 21 im Inneren eines die Mitnehmernabe 15 mit Abstand umfassenden Rohrschaftes 24. Dieser Rohrschaft geht unter Belassung einer Durchtrittsöffnung in die Scheibe 16 über, die unterseitig ebenfalls die zuvor beschriebenen Rippen 19 in gleicher Anordnung aufweist. Auch zwischen diesen Rippen 19 befinden sich die schon erwähnten Luftleitkanäle 20, deren Luftauslaßöffnungen 22 ebenfalls am Umfangsbereich der Scheibe 16 zwischen zwei benachbarten Rippen 19 gebildet sind.

Zur Luftförderung und zur Distanzhalterung zwischen Rohrschaft 24 und Mitnehmernabe 15 dienen Axialschlaufen 25 bildende Rippen, die im Bezug auf die Arbeitsdrehrichtung des aus Fig. 6 ersichtlichen Haushaltsgerätewerkzeuges 14 entsprechend gewölbt sind, um die Luft in die Luftleitkanäle 20 unterhalb der Scheibe 16 zu drücken. Dabei versteht es sich, daß der Rohrschaft 24 so hoch über die Scheibenebene geführt ist, daß der Innenraum des Rohrschaftes zur Lufteinführung frei bleibt. Die Funktionsweise des aus den Fig. 6 bis 8 ersichtlichen Haushaltsgerätewerkzeuges ist im Prinzip die gleiche wie bei dem aus den Fig. 2 bis 5 ersichtlichen Werkzeug.

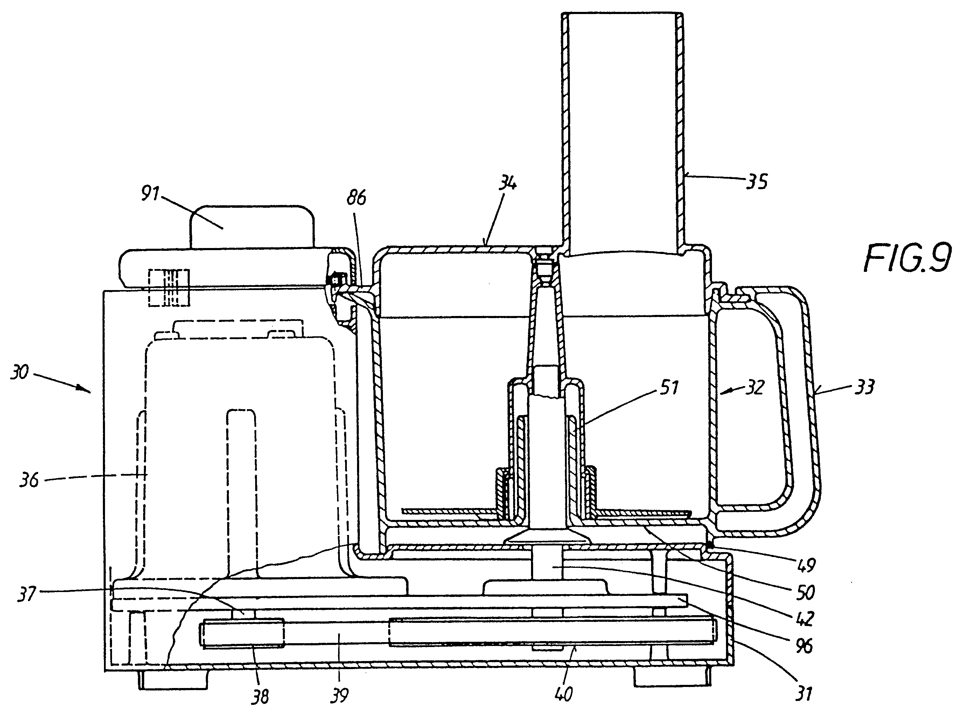

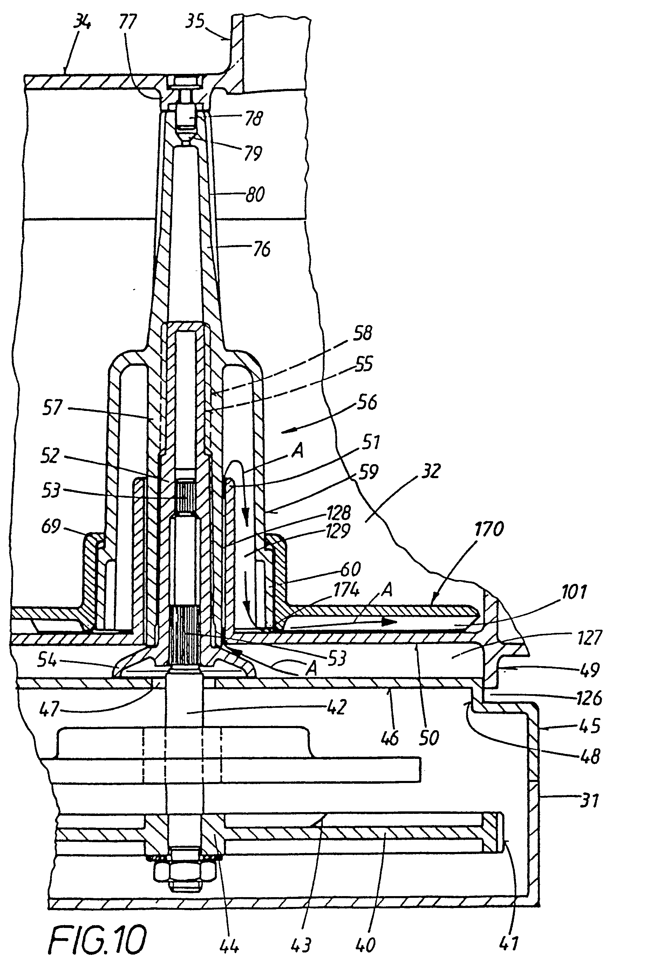

In den Fig. 9 und 10 der Zeichnung ist ein anderes elektrisch betriebenes Gerät für die Bearbeitung und Zubereitung von Nahrungsmitteln dargestellt, das an sich bekannt ist. Dieses Gerät hat ein Gehäuse 30, in welchem der Elektromotor und Steuerungs- und Schalteinrichtungen untergebracht sind. Das Gehäuse 30 hat einen Gehäusefuß 31, wobei Gehäuse 30 und Gehäusefuß 31 – wie die Fig. 9 erkennen läßt – im wesentlichen L-förmig gestaltet sind. Auf der neben dem Gehäuse 30 liegenden Oberfläche des Gehäusefußes 31 ist ein generell mit 32 bezeichneter Aufnahmebehälter (Topf) dargestellt. Der Aufnahmebehälter 32 ist am Gehäusefuß 31 in bekannter Weise gegen Abheben zu sichern, z.B. durch nicht näher dargestellte bajonettverschlußartige Halter. Der Aufnahmebehälter 32 hat einen angeformten Handgriff 33 und einen abnehmbaren Deckel 34, der seinerseits mit einem Einfüllstutzen 35 ausgestattet ist, durch den in bekannter Weise das Zuführen von Nahrungsmitteln erfolgt. Auch der Deckel 34 ist am Aufnahmebehälter 32 beispielsweise durch Unterfassen von Vorsprüngen lagegesichert.

In dem Gehäuse 30 ist ein an sich bekannter und daher nicht mit dargestellter Elektromotor untergebracht. Dieser Elektromotor sitzt unter einer Motorabdeckung 36 und hat eine Motorwelle 37, deren freies Ende in den Hohlraum des Gehäusefußes 31 hineinragt und dort ein Rad 38 trägt, welches mit einem Riemen, vorzugsweise mit einem Zahnriemen 39 zusammenwirkt. Dieser Zahnriemen 39 wird, wie die Fig. 9 und 10 der Zeichnungen erkennen lassen, über ein im Durchmesser wesentlich größeres Antriebsrad 40 herumgeführt. Dieses Antriebsrad 40 ist im dargestellten Ausführungsbeispiel als Lüfterrad ausgebildet und hat an seiner Umfangsfläche liegend eine Vielzahl von Zähnen, die mit den nicht näher bezeichneten Gegenzähnen des Zahnriemens 39 in an sich bekannter Weise zusammenwirken.

Das als Lüfterrad ausgebildete Antriebsrad 40 ist auf dem in den Hohlraum des Gehäusefußes 31 hineinragenden Ende einer Arbeits- bzw. Werkzeugwelle 42 angeordnet. Gemäß dem gewählten Ausführungsbeispiel ist das Lüfterrad 40 auf dem Ende der Arbeitswerkzeugwelle 42 mittels einer Mutter unter Zwischenschaltung einer Scheibe gehalten. Daneben können aber auch andere bekannte Befestigungsarten zum Halten des Lüfterrades auf der Arbeitswerkzeugwelle 42 benutzt werden. Dem eine Nabe 44 aufweisenden Lüfterrad 40 ist eine Vielzahl von Schaufeln 43 zugeordnet. Hinsichtlich der Ausbildung und Gestaltung dieser Schaufeln gibt es zahlreiche Möglichkeiten, die an sich bekannt sind, so daß auf die Angabe von Einzelheiten verzichtet wird.

Wie die Fig. 9 und 10 der Zeichnungen erkennen lassen, ist der Gehäusefuß 31 zweiteilig ausgestaltet, wobei diese beiden Teile mit bekannten und daher zeichnerisch fortgelassenen Mitteln zusammengehalten werden können. Der untere, nicht näher bezeichnete Teil des Gehäusefußes 31 ruht auf einer Fläche, beispielsweise auf einer Tischplatte. Der Oberteil 45 hat einen glatten Durchbruch 47 zum Durchgriff der Arbeitswerkzeugwelle 42. Dieser Durchbruch 47 liegt im Bereich der Decke 46 des Oberteiles 45, wobei die Decke 46 über einen Absatz 48 in die Mantelfläche übergeht. Der Aufnahmebehälter 32 hat an seiner Unterseite Vorsprünge 49, die dem Boden 50 des Aufnahmebehälters 32 unmittelbar angeformt sind. Die Vorsprünge 49 – die in Abstand voneinander liegen – wirken mit der Außenfläche des Absatzes 48 zusammen, so daß eine Querverschiebung des Aufnahmebehälters 32 auf dem Aufstellfuß 31 nicht möglich ist.

Durch die Anordnung von mehreren Vorsprüngen 49 und durch die Bildung eines Spaltes 126 (vgl. dazu die Fig. 10 der Zeichnung) sind Öffnungen gebildet, durch welche der Zwischenraum 127 zwischen der Decke 46 und dem Boden 50 mit der freien Atmosphäre in Verbindung stehen. Die durch den Spalt 126 eintretende Luft wird in noch zu schildernder Weise dem erfindungsgemäßen Haushaltsgerätewerkzeug zugeführt.

Dem Boden 50 des Aufnahmebehälters 32 ist ein hülsenartiger Vorsprung 51 angeformt. Dieser ragt verhältnismäßig weit in das Innere des Aufnahmebehälters 32 hinein. In den hülsenartigen Vorsprung 51 ragt das obere Ende der Arbeits- bzw. Werkzeugwelle 42. Diese ist durchmessermäßig mehrfach abgesetzt und hat etwa im Bereich des hülsenartigen Vorsprunges 51 liegend zwei in Abstand voneinander angeordnete Befestigungsbereiche 53, die als Rändelungen an ihrer Außenfläche ausgebildet sind. Diese Befestigungsbereiche 53 dienen zur festen Verbindung mit einer generell mit 52 bezeichneten Isolierhülse, die einstückig aus einem Kunststoff hergesellt und nach oben hin verschlossen ist. Das gegenüberliegende andere Ende der Isolierhülse 52 ist als scheibenartiger Fuß 54 ausgebildet, der in den Zwischenraum 127 zwischen der Decke 46 und dem Boden 50 des Aufnahmebehälters 32 angeordnet ist. Dieser scheibenartige Fuß sorgt dafür, daß Flüssigkeiten, die beim Gebrauch des elektrisch betriebenen Gerätes durch den hülsenartigen Vorsprung 51 hindurch aus dem Aufnahmebehälter 32 kommend in den Zwischenraum 129 gelangt sein sollten, aus diesem wieder hinausgeschleudert werden und dabei entweder durch den Spalt 126 oder durch die Freiräume zwischen den Vorsprüngen 49 ins Freie gelangen können.

An der Außenseite der Isolierhülse 52 sind Kupplungsvorsprünge 55 vorgesehen, die mit Gegenkupplungen 58 eines generell mit 56 bezeichneten Adapters zusammenwirken. In Draufsicht gesehen bilden die Kupplungsvorsprünge 55 der Isolierhülse 52 eine etwa wellenförmige oder auch zahnradförmig verlaufende Fläche, die sich zu einem Kreis schließt. In die Wellentäler bzw. die Zahnlücken greifen zwischen den Kupplungsvorsprüngen 55 die Gegenkupplungen 58 des Adapters 56 ein, wobei die Kraftangriffsflächen im wesentlichen senkrecht aufeinanderstehen. Auf diese Weise ist der Adapter 56 auf Mitnahme gekuppelt. Dabei sind die Gegenkupplungen 58 so gestaltet, daß ein paßgerechtes, formschlüssiges Zusammenwirken mit den Kupplungen 55 erfolgt.

Wie aus der Fig. 10 der Zeichnung am besten erkennbar ist, hat der Adapter 56 ein inneres Teilstück 57, das nach unten hin offen ist. Der untere Bereich des inneren Teilstückes 57 greift in den Zwischenraum zwischen der Innenwand des hülsenartigen Vorsprunges 51 und der Außenwand der Isolierhülse 52.

Unter Bildung eines Zwischenraumes hat der Adapter 56 auch ein äußeres Teilstück 59, welches nach oben hin geschlossen ist, nach unten jedoch offen bleibt. Im Bereich der unteren Außenfläche des äußeren Teilstückes hat der Adapter 56 Gegenkupplungen 60, die mit Kupplungen 61 des Werkzeugelementes (des Haushaltsgerätewerkzeuges) zusammenwirken. Die Gegenkupplungen 60 sind im gewählten Ausführungsbeispiel untereinander gleichgestaltet und gleichmäßig verteilt über den unteren Bereich der Umfangsfläche des äußeren Teilstückes 59 angeordnet. Auch hier gilt, daß in Draufsicht gesehen der untere Bereich des äußeren Teilstückes 49 wellenförmige oder zahnradförmige Flächen aufweist, die sich zu einem Kreis schließen. In die Wellentäler bzw. Zahnlücken zwischen den Gegenkupplungen 60 greifen die Kupplungen 61 passend hinein.

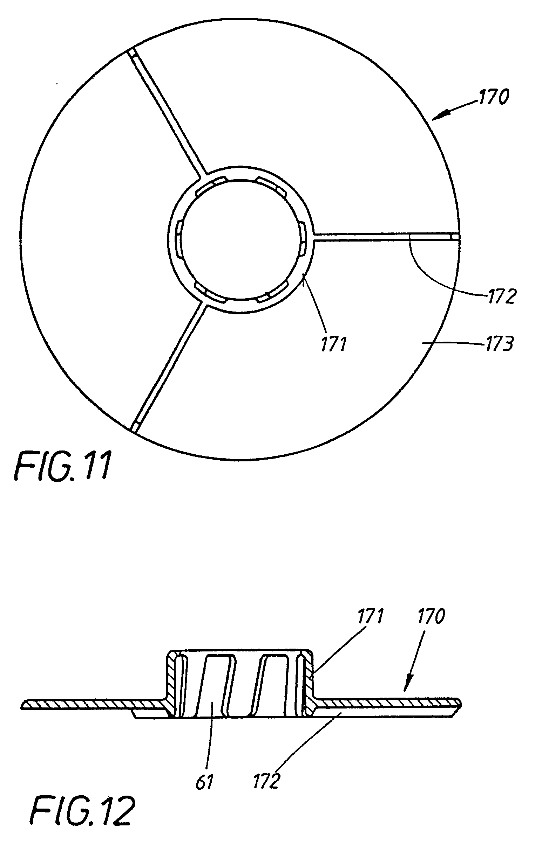

Die Kupplungen und Gegenkupplungen sowohl vom Adapter als auch von der Isolierhülse 52 können in Richtung der Längsachse des Adapters 56 bzw. der Isolierhülse 52 verlaufen. Daneben ist es aber auch möglich, daß die Kupplungen und Gegenkupplungen mit dieser Längsachse jeweils einen Winkel einschließen. Entsprechendes gilt auch für die mit dem Adapter 56 zusammenwirkenden Kupplungen der Werkzeuge, die eine angepaßte Schrägstellung haben, vergl. dazu die Fig. 12 der Zeichnungen.

Die Gegenkupplungen 60 des äußeren Teilstückes 59 des Adapters 56 arbeiten mit Kupplungen 61 des Werkzeugelementes 170 zusammen. Das mit dem Adapter 56 zu kuppelnde Werkzeugelement 170 ist in den Fig. 11 und 12 der Zeichnungen dargestellt. Dieses Werkzeugelement ist als Sahnescheibe 170 ausgebildet. Die Sahnescheibe 170 hat auf ihrer dem Boden des Aufnahmebehälters 32 zugekehrten Seite insgesamt drei Rippen 172, die untereinander gleichgestaltet und in regelmäßiger Anordnung vorhanden sind. Die Rippen 172 münden jeweils in die als Mitnehmernabe 171 ausgebildete Nabe der Sahnescheibe 170 ein. Die Rippen 172 schließen Luftleitkanäle 173 ein, deren untere Wand beim bestimmungsgemäßen Gebrauch von der Innenfläche des Bodens 50 des Aufnahmebehälters 32 gebildet wird. Die Rippen 172 liegen mit ihren äußeren Flächen auf dem Boden 50 des Aufnahmebehälters 32 auf bzw. enden unmittelbar davor. Den Luftleitkanälen 173 sind Lufteinlaßöffnungen 174 zugeordnet, während Luftauslaßöffnungen 101 durch den am Umfangsbereich der Sahnescheibe 170 zwischen benachbarten Rippen 172 vorhandenen Freiraum gebildet werden.

Erfindungsgemäß sind den Lufteinlaßöffnungen 174 der Sahnescheibe 170 Luftführungen vorgeschaltet, die mit dem Buchstaben A gekennzeichnet sind. Die Luftführungen A werden im Sinne der in Fig. 10 eingezeichneten Pfeile von der Luft durchströmt. Die Luftführungen A lassen sich in mehrere Teilabschnitte aufgliedern. Der erste Teilabschnitt ist gebildet durch den mit der Atmosphäre in Verbindung stehenden Zwischenraum 127 zwischen dem Boden 50 des Aufnahmebehälters 32 und der Decke 46 des Gehäusefußes 31, vergl. dazu die Fig. 10 der Zeichnung. Die Luft kann in den Zwischenraum 127 entweder durch den Spalt 126 oder durch die Zwischenräume zwischen den Vorsprüngen 49 gelangen.

Daran anschließend ist ein Ringraum 128 für die Führung der Luft vorgesehen. Der Ringraum 128 liegt zwischen der Innenwandung des hülsenartigen Vorsprunges 51 des Bodens 50 und Bereichen des Adapters 56. Anschließend ist ein zweiter Ringraum 129 zur Führung der Luft vorgesehen. Dieser Ringraum 129 liegt zwischen den Außenwandungen des hülsenartigen Vorsprunges 51 und Bereichen der Innenwand des Adapters 56. Von dem Ringraum 129 gelangt die Luft dann durch die Lufteinlaßöffnungen 174 in die Luftleitkanäle 173, durchströmt diese und tritt dann durch die Luftauslaßöffnungen 101 wieder aus, wobei sie in innigem Kontakt mit dem zu behandelnden Gut, beispielsweise mit Schlagsahne gelangt. Die Fig. 10 der Zeichnung läßt deutlich erkennen, daß durch die gewählte Anordnung der Luftführung A ein mehrfaches Umlenken der Luft im Sinne der eingezeichneten Pfeile der Fig. 10 erfolgt.

Wie die Fig. 12 der Zeichnungen erkennen läßt, hat die Mitnehmernabe 171 der Sahnescheibe 170 Kupplungen 61, die mit den Gegenkupplungen 60 des Adapters 56 zusammenwirken. Dabei liegt in der Arbeitslage der Sahnescheibe 170 der Auflagerand 69 entfernt von der nicht näher bezeichneten Schulter im Bereich der Gegenkupplung 60 des Adapters 56. Dies geschieht, um zu gewährleisten, daß die Außenfläche der Rippen 172 entweder unmittelbar auf dem Boden des Aufnahmebehälters 32 aufliegen oder ganz kurz davor enden. Auf der anderen Seite ist der Auflagerand 69 als Mitnehmer benutzbar, nämlich dann, wenn der Adapter 56 zusammen mit der Sahnescheibe 170 von der Isolierhülse 52 aus dem Aufnahmebehälter 32 herausgezogen werden soll.

Die Sahnescheibe 170 dient nicht nur zum Bereiten von Schlagsahne sondern auch zum Zubereiten von Ei-Schnee, Majonnaise und dergl. Bei Benutzung einer solchen Sahnescheibe 170 wird nicht nur ein Rühreffekt erzielt sondern es gelingt, mit ihr die sahnige Konsistenz des Rührgutes durch Verteilung feinster Luftbläschen im Rührgut zu erzielen. Dabei wird durch die Drehung der Sahnescheibe 170 das Rührgut infolge der Fliehkraft im Eck-Ring-Bereich des Bodens 50 des Aufnahmebehälters 32 wulstartig angeordnet und mit feinsten Luftbläschen durchsetzt. Durch diese intensive Arbeitsweise der Sahnescheibe 170 ist die benötigte Zeit selbst zur Herstellung größerer Mengen von Schlagsahne, Ei-Schnee, Majonnaise od.dgl. gering.

Aus der Fig. 11 der Zeichnung ist ersichtlich, daß die Sahnescheibe 170 auf ihrer dem Behälterboden 50 abgekehrten Seite glattwandig gehalten ist. Irgendwelche Durchbrüche fehlen bei der Sahnescheibe 170. Stattdessen wird den Lufteinlaßöffnungen 174 der Sahnescheibe 170 die Luft in Richtung der Luftführungen A zugeführt, wie dies die Fig. 10 veranschaulicht.

Bei dem Ausführungsbeispiel der Küchenmaschine gemäß den Fig. 9 und 10 der Zeichnungen hat der Adapter 56 eine Verlängerung 76, die durchmessermäßig gegenüber dem unteren Bereich des Adapters 56 verkleinert ist. Im dargestellten Ausführungsbeispiel erstreckt sich die Verlängerung 76 bis etwa zum Deckel 34. Dort ist ein Lager 77 in einer Verdickung 34 des Deckels vorgesehen, welches zur Unterbringung eines Lagerstiftes 78 dient, dessen aus dem Lager 77 herausragendes Ende in eine Bohrung 79 des vorderen freien Endes der Verlängerung 76 des Adapters 56 eingreift. Eine derartige Lagerstelle läßt es zu, daß der Deckel 34 ohne weiteres vom Aufnahmebehälter 32 entfernt werden kann. Dies deshalb, weil der Lagerstift 78 leicht aus der Bohrung 79 der Verlängerung 76 des Adapters 56 herausgezogen werden kann. Umgekehrt greift beim Aufsetzen des Deckels 34 dessen Lagerstift 78 wieder in diese Bohrung 79 ein.

Erwähnt sei, das an der Außenfläche der Verlängerung 76 des Adapters 56 Gegenkupplungen 80 vorhanden sind, die in ihrem Aufbau und auch in ihrer Wirkungsweise denjenigen Gegenkupplungen 60 entsprechen, die im unteren Bereich des Adapters 56 vorhanden sind. Mit den Gegenkupplungen 80 der Verlängerung 76 kann in nicht dargestellter, an sich bekannter Weise ein Werkzeugträger zusammenwirken. Dieser Werkzeugträger kann in ebenfalls bekannter und daher nicht dargestellter Weise Arbeitswerkzeuge, wie beispielsweise eine Raspelscheibe, aufnehmen.

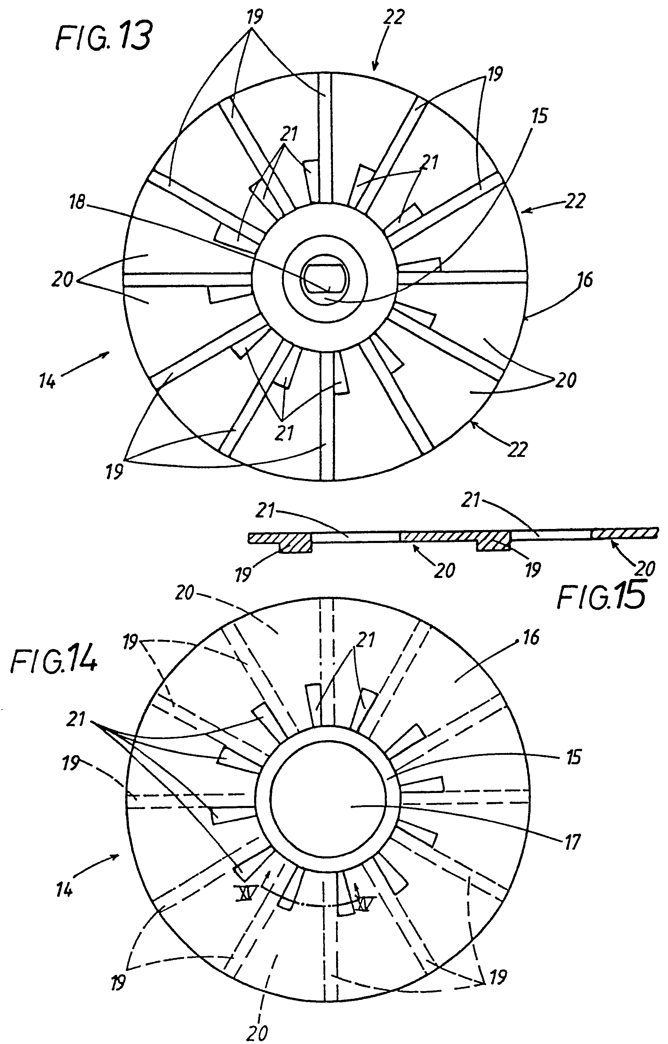

In den Fig. 13 bis 15 ist eine weitere Ausführungsform des Haushaltsgerätewerkzeuges (der Sahnescheibe) dargestellt, die bei der Küchenmaschine gemäß der Fig. 1 zum Einsatz kommen kann. Bei der Ausführungsform des Haushaltsgerätewerkzeuges 14 nach den Fig. 13 bis 15 der Zeichnungen sind die Lufteinlaßöffnungen als glatte, in der Ebene der Scheibe liegende Durchbrüche ausgebildet. Ein solches Werkzeugelement läßt sich einfach und wohlfeil herstellen, insbesondere, weil hier auf die vorgewölbten Begrenzungswandungen der Lufteinlaßöffnungen gemäß den Fig. 3 bis 5 verzichtet wird. Im einzelnen gilt dazu folgendes:

Das Haushaltsgerätewerkzeug 14 gemäß der Ausführungsform nach den Fig. 13 bis 15 der Zeichnungen besteht im wesentlichen wiederum aus einer Mitnehmernabe 15 und einer zu dessen Längsachse in senkrechter Ebene angeordneten, ein Werkzeugelement darstellenden Scheibe 16, wobei die Scheibe 16 am unteren Ende der Mitnehmernabe 15 angeordnet ist, während das obere Ende der Mitnehmernabe 15 eine Handhabe 17 aufweist. Im unteren Bereich der Mitnehmernabe 15 ist eine unrunde Mitnehmerbohrung 18 (Fig. 13) angeordnet, welche auf die nicht dargestellte Mitnehmerwelle der Küchenmaschine paßt. Unterhalb der Scheibe 16, ausgehend vom Umfangsbereich der Mitnehmernabe 15, befinden sich sternförmig angeordnete Rippen 19, die zwischen sich Luftleitkanäle 20 einschließen, deren untere Seitenwand beim bestimmungsgemäßen Gebrauch des Haushaltsgerätewerkzeuges vom Behälterboden 13 gebildet wird, über welchen sich die Rippen 19 mit geringem Abstand befinden. Diesen Luftleitkanälen 20 sind im Bereich der Mitnehmernabe 15 Lufteinlaßöffnungen 21 zugeordnet, während die Luftauslaßöffnungen 22 durch den am Umfangsbereich der Scheibe 16 zwischen zwei benachbarten Rippen 19 vorhandenen Freiraum gebildet werden.

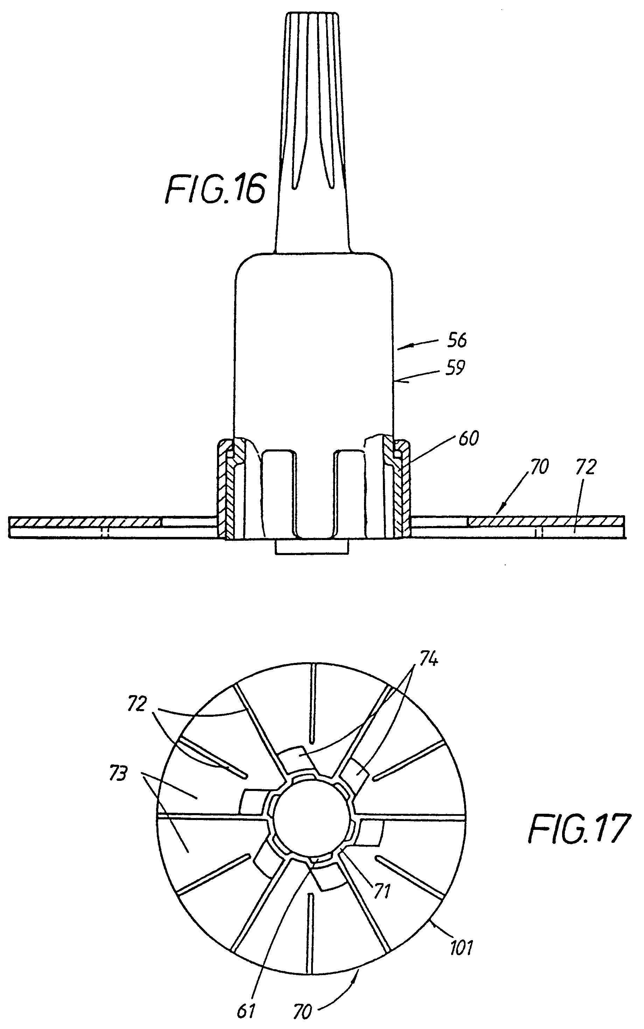

Aus den Fig. 13 bis 15 der Zeichnungen ist ersichtlich, daß die Lufteinlaßöffnungen 21 als glatte, in der Ebene der Scheibe 16 liegende Durchbrüche ausgebildet sind. Im gewählten Ausführungsbeispiel ist jedem Luftleitkanal 20 eine Lufteinlaßöffnung 21 zugeordnet. Von oben gesehen haben die Lufteinlaßöffnungen im wesentlichen trapezförmige Ausbildung. Es wäre jedoch auch ohne weiteres denkbar, quadratische, rechteckige oder auch runde oder unrunde Querschnittsformen zu wählen. Auch bei dieser Ausführungsform des Haushaltsgerätewerkzeuges wird beim bestimmungsgemäßen Gebrauch das Arbeitsgut infolge der Fliehkraft nach außen gedrängt, so daß die Lufteinlaßöffnungen 21 frei bleiben und bei Drehung der in Fig. 14 dargestellten Scheibe im Uhrzeigersinn Luft in die Lufteinlaßöffnungen 21 gedrückt wird, die dann durch die Luftleitkanäle 20 zum Ringspalt hin zwischen der Seitenwandung des Aufnahmebehälters 12 und der Scheibe 16 gedrückt wird und dort in das Rührgut eintreten kann.

Eine weitere Ausführungsform eines Haushaltsgerätewerkzeuges ist in den Fig. 16 und 17 der Zeichnung dargestellt. Das jetzt mit 70 bezeichnete Werkzeugelement (die Sahnescheibe) soll zusamenwirken mit einem Gerät zum Zubereiten von Nahrungsmitteln gemäß den Fig. 9 und 10 der Zeichnung.

Aus den Fig. 16 und 17 der Zeichnung folgt, daß die Sahnescheibe 70 auf ihrer dem Boden des Aufnahmebehälters 32 zugekehrten Seite eine Vielzahl von sternförmig angeordneten Rippen 72 hat, die jedoch unterschiedlich lang bemessen sind und zwar wechselt jeweils eine kurze mit einer langen Rippe 72 ab. Dabei mündet die längere Rippe 72 jeweils in die als Mitnehmernabe 71 ausgebildete Nabe der Sahnescheibe 70 ein. Die längeren Rippen 72 schließen Luftleitkanäle 73 ein, deren untere Wand beim bestimmungsgemäßen Gebrauch von der Innenfläche des Bodens 50 des Aufnahmebehälters 32 gebildet wird. Die Rippen 72 liegen mit ihren äußeren Flächen auf dem Boden 50 des Aufnahmebehälters 32 auf. Den Luftleitkanälen 32 sind im Bereich der Mitnehmernabe 71 Lufteinlaßöffnungen 74 zugeordnet, während Luftauslaßöffnungen 101 durch den am Umfangsbereich der Sahnescheibe 70 zwischen benachbarten Rippen 52 vorhandenen Freiraum gebildet werden. Die Lufteinlaßöffnungen 74 sind als glatte, in der Ebene der Sahnescheibe 70 liegende Durchbrüche ausgebildet. Aus der Fig. 17 der Zeichnungen ist zu erkennen, daß jeweils eine Lufteinlaßöffnung 74 zwischen zwei längeren Rippen 72 angeordnet ist. Die gleiche Fig. 17 zeigt ferner, daß die Lufteinlaßöffnungen 74 etwa viereckig gestaltet sind. Es ist jedoch ohne weiteres möglich, abweichend davon den Lufteinlaßöffnungen 74 eine andere als die dargestellte Ausbildung zu geben. Insbesondere können auch unrunde, runde oder rechteckige Querschnittsformen gewählt werden.

Im übrigen hat die Mitnehmernabe 71 Kupplungen 61, die denjenigen der Sahnescheibe 70 entsprechen. Diese Kupplungen 71 wirken mit den Gegenkupplungen 60 eines Adapters 56 zusammen. Der Auflagerand 69 liegt in der Arbeitslage etwas entfernt von der nicht näher bezeichneten Schulter im Bereich der Gegenkupplungen 60 des Adapters 56. Dies geschieht, um zu gewährleisten, daß die Außenflächen der Rippen 72, wie gewollt, auf dem Boden des Aufnahmebehälters 32 aufliegen. Auf der anderen Seite ist der Auflagerand 69 als Mitnehmer benutzbar, nämlich dann, wenn der Adapter 56 zusammen mit der Sahnescheibe 70 von der Isolierhülse 52 aus dem Aufnahmebehälter 32 herausgezogen werden soll.

Wie schon erwähnt, dient die Sahnescheibe 70 nicht nur zum Bereiten von Schlagsahne sondern auch zum Zubereiten von Ei-Schnee, Majonnaise und dergl.

Im übrigen ist bei der dargestellten Ausführungsform des Adapters 56 nicht nur vorgesehen, diesen in seinem unteren, also dem Boden 50 des Aufnahmebehälters 32 zugekehrten Bereich wahlweise eines der unterschiedlich gestalteten Werkzeuge zuzuordnen sondern es wird zusätzlich auch die Möglichkeit gegeben, im oberen, also dem Deckel 34 zugekehrten Bereich entweder direkt mit dem Adapter 56 Arbeitswerkzeuge zu kuppeln oder dort einen nicht dargestellten Werkzeugträger lösbar zu befestigen, der seinerseits Arbeitswerkzeuge, wie Raffelscheiben, Pommes-Frites-Scheiben, Reibscheiben, Parmesanscheiben od. dgl. trägt.

Wie bereits erwähnt, sind die dargestellten Ausführungen nur beispielsweise Verwirklichungen der Erfindung. Diese ist nicht darauf beschränkt. Vielmehr sind noch mancherlei andere Ausführungen und Anwendungen möglich. So ist es beispielsweise denkbar, zum besseren Durchmischen des Rührgutes die Scheibe 16 geneigt zum Behälterboden anzuordnen oder nur einen Scheibenbereich nach oben anzuwinkeln. Außerdem ist es denkbar, für die Luftzuführung zu den Luftleitkanälen 20 unterhalb der Scheibe 16 andere als die vorbeschriebenen Mittel zu benutzen und stattdessen beispielsweise lüfterähnliche Naben zu verwenden. Außerdem ist die Erfindung nicht an ein Haushaltsgerätewerkzeug gebunden, das austauschbar in eine Küchenmaschine einsetzbar ist. Es ist vielmehr auch denkbar, das Haushaltsgerätewerkzeug fest in einem Aufnahmebehälter

zu installieren und den gesamten Aufnahmebehälter auf einen den motorischen Antrieb enthaltenden Küchenmaschinenfuß aufzusetzen. Jedoch wird im allgemeinen der lösbaren Verbindung des Haushaltswerkzeuges mit der Arbeitswerkzeugwelle der Vorzug gegeben.

Bezugszeichenliste:
10 Gehäuse
11 Gehäusefuß
12 Aufnahmebehälter
13 Behälterboden
14 Haushaltsgerätewerkzeug
15 Mitnehmernabe
16 Werkzeugelement (Scheibe)
17 Handhabe
18 Mitnehmerbohrung
19 Rippe
20 Luftleitkanal
21 Lufteinlaßöffnung
22 Luftauslaßöffnung
23 Wandteil
24 Rohrschaft
25 Axialschaufel
30 Gehäuse (II. Ausführung)
31 Gehäusefuß
32 Aufnahmebehälter
33 Handgriff (von 32)
34 Deckel
35 Einfüllstutzen (an 34)
36 Motorabdeckung
37 Motorwelle
38 Rad (auf 37)
39 Zahnriemen
40 Antriebsrad (Lüfterrad)
41 Zähne (von 40)
42 Arbeitswerkzeugwelle
43 Schaufeln (von 40)
44 Nabe (von 40)
45 Oberteil (von 31)
46 Decke
47 Durchbruch (in 46)
48 Absatz
49 Vorsprung (von 50)
50 Boden (von 32)
51 hülsenartiger Vorsprung (von 50)
52 Isolierhülse
53 Befestigungsbereich
54 scheibenartiger Fuß (von 52)
55 Kupplungsvorsprünge (an 52)
56 Adapter
57 Inneres Teilstück
58 Gegenkupplungen (an 57)
59 äußeres Teilstück (von 56)
60 Gegenkupplungen (an 59)
61 Kupplungen (am Werkzeugelement)
69 Auflagerand
70 Werkzeugelement (Scheibe)
71 Mitnehmernabe (an 70)
72 Rippen (von 70)
73 Luftleitkanal
74 Lufteinlaßöffnung
76 Verlängerung (von 56)
77 Lager (an 34)
78 Lagerstift

79 Bohrung
80 obere Gegenkupplung (an 76)
101 Luftauslaßöffnung
126 Spalt (zwischen 45 und 49)
127 Zwischenraum (zwischen 50 und 46)
128 I. Ringraum
129 II. Ringraum
170 Werkzeugelement (Scheibe)
171 Mitnehmernabe (an 170)
172 Rippen (von 170)
173 Luftleitkanal
174 Lufteinlaßöffnung

A   Luftführung

**Patentansprüche**

1. Küchenmaschine mit einem Aufnahmebehälter (12; 32), in dem ein Haushaltswerkzeug (14; 170) in Form einer eine Mitnehmernabe aufweisenden Scheibe drehbar angeordnet ist zum Bereiten von Schlagsahne, Eischnee, Majonnaise od. dgl., wobei diese Scheibe dicht über dem Behälterboden (13) angeordnet ist, von etwa ihrem mittleren Bereich ausgehende, zum Scheibenumfang gerichtete Luftleitkanäle (20) aufweist, die im mittleren Scheibenbereich mit Lufteinlaßöffnungen (21) und am Umfangsbereich mit Luftauslaßöffnungen (22) versehen sind und daß die Scheibe (16) auf ihrer Unterseite die Luftleitkanäle (20) zwischen sich einschließende Rippen (19) aufweist und der Behälterboden (13) quasi eine Begrenzungsseite der Luftleitkanäle (20) bildet, dadurch gekennzeichnet, daß der Außendurchmesser der Scheibe (16) etwas kleiner als der Innendurchmesser des Aufnahmebehälters (12) ist, so daß zwischen Scheibe (16) und Seitenwandung des Aufnahmebehälters (12) ein Ringspalt gebildet ist.

2. Küchenmaschine nach Anspruch 1, dadurch gekennzeichnet, daß die Scheibe (16) im bezug auf die zur Längsachse der Mitnehmernabe (15) senkrechte Ebene geneigt dazu angeordnet ist.

3. Küchenmaschine nach Anspruch 1 oder 2, dadurch gekennzeichnet, daß ein Teilbereich der Scheibe (16) nach oben angewinkelt ist.

4. Küchenmaschine nach Anspruch 1 mit einem Gehäuse (30) zur Unterbringung des Elektromotors und von zugehörigen Schalt- und Steuereinrichtungen, mit einer vom Elektromotor antreibbaren Arbeitswerkzeugwelle (42), deren oberes Ende mit einem beidseitig offenen, hülsenartigen Vorsprung (51) am Boden (50) eines Aufnahmebehälters (32) hineinragt und mit dem eine Isolierhülse (52) fest verbunden ist, die der lösbaren Aufnahme des Arbeitswerkzeuges (170) dient, mit einem den Aufnahmebehälter (32) verschließbaren Deckel (34), dem eine Sicherheitseinrichtung zugeordnet ist, dadurch gekennzeichnet, daß den Lufteinlaßöffnungen (174) Luftführungen (A) vorgeschaltet sind, die gebildet werden durch einen mit der Atmosphäre in Verbindung stehenden Zwischenraum (127) zwischen dem Boden (50) des Aufnahmebehälters (32) und dem Deckel (46) eines Gehäusefußes (31), einem sich daran anschließenden Ringraum (128) zwischen der Innenwandung des hülsenartigen Vorsprunges (51) des Bodens (50) und Bereichen eines Adapters (56) und durch einen weiteren Ringraum (129) zwischen den Außenwandungen des hülsenartigen Vorsprunges (51) und Bereichen der Innenwand des Adapters (56), wobei der Adapter (56) abnehmbar auf der fest auf der Arbeitswerkzeugwelle (42) des motorischen Antrieb sitzenden Isolierhülse (52) angeordnet ist und der auf einem Teilbereich seiner Umfangsfläche Gegenkupplungen (60) aufweist, die mit Kupplungen (61) der Mitnehmernabe der Scheibe (170) zusammenwirken (Fig. 9 und 10).

5. Küchenmaschine nach Anspruch 4, dadurch gekennzeichnet, daß die einstückige Scheibe (170) auf ihrer dem Behälterboden (50) abgekehrten Seite glattwandig gehalten ist, während sie auf der gegenüberliegenden anderen Seite drei untereinander gleichgestaltete und gleichen Abstand voneinander aufweisende Rippen (172) trägt, die an ihrem inneren Ende in die Mitnehmernabe (171) übergehen (Fig. 11 und 12).

6. Küchenmaschine nach Anspruch 4 und 5, dadurch gekennzeichnet, daß in Draufsicht gesehen die Kupplungsvorsprünge der Isolierhülse (52) und die Gegenkupplungen des Adapters (56) eine wellen- oder zahnradförmige, sich zu einem Kreis ergänzende Fläche einschließen, wobei in die Wellentäler bzw. Zahnlücken die Gegenkupplungen (58) des inneren Teilstückes (57) des Adapters (56) bzw. die Kupplungen (61) der Scheibe (170) formschlüssig eingreifen (Fig. 9 bis 12).

7. Küchenmaschine nach Anspruch 4, dadurch gekennzeichnet, daß in den Zwischenraum (127) zwischen dem Boden (50) des Aufnahmebehälters (32) und der Decke (46) des Gehäusefußes (31) der scheibenförmige Fuß (54) der Isolierhülse (52) hineinragt und daß die Luftführung (A) über die Umfangsfläche des Fußes (54) in den Ringraum (128) erfolgt.

8. Küchenmaschine nach Anspruch 1, dadurch gekennzeichnet, daß die Lufteinlaßöffnungen (21) als glatte, in der Ebene der Scheibe (16) liegende Durchbrüche ausgebildet sind (Fig. 13 bis 15).

9. Küchenmaschine nach Anspruch 8, dadurch gekennzeichnet, daß die als glatte Durchbrüche der Scheibe (16) ausgebildeten Lufteinlaßöffnungen (21) zwischen den Rippen (19) an die Mitnehmernabe (15) angrenzend angeordnet sind.

10. Küchenmaschine nach Anspruch 8 oder 9, dadurch gekennzeichnet, daß die die als glatte Durchbrüche ausgebildeten Lufteinlaßöffnungen (21) aufweisende Scheibe (16) eine Mitnehmernabe (71) aufweist, die mit Kupplungen (61) ausgestattet ist, welche mit Gegenkupplungen (60) zusammenwirken, die ein Adapter aufweist, der seinerseits abnehmbar auf einer Innenhülse (52) angeordnet ist, die ihrerseits mit der vom Motor angetriebenen Arbeitswerkzeugwelle (42) fest verbunden ist und die einen beidseitig offenen hülsenartigen Vorsprung am Boden des Aufnahmebehälters (32) durchgreift.

## Claims

1. A kitchen appliance comprising a receiving container (12; 32) in which a domestic utensil (14; 170) in the form of a disc having a drive hub is arranged rotatably for preparing whipped cream, beaten egg white, mayonnaise or the like, wherein said disc is arranged closely above the bottom (13) of the container and has air ducts (20) which extend from approximately the central region thereof and which are directed towards the periphery of the disc and which are provided with air inlet openings (21) in the central region of the disc and air outlet openings (22) at the peripheral region and the disc (16) has on its underside the air ducts (20) between enclosing ribs (19) and the bottom (13) of the container virtually forms one boundary side of the air ducts (20), characterised in that the outside diameter of the disc (16) is somewhat smaller than the inside diameter of the receiving container (12) so that an annular gap is formed between the disc (16) and the side wall of the receiving container (12).

2. A kitchen appliance according to claim 1 characterised in that in relation to the plane which is perpendicular to the longitudinal axis of the drive hub (15), the disc (16) is arranged inclinedly relative thereto.

3. A kitchen appliance according to claim 1 or claim 2 characterised in that a portion of the disc (16) is bent upwardly.

4. A kitchen appliance according to claim 1 comprising a housing (30) for accommodating the electric motor and associated switching and control devices, a working utensil shaft (42) which can be driven by the electric motor and the upper end of which, with a sleeve-like projection (51) which is open at both ends, projects in at the bottom (50) of a receiving container (32), and to which there is fixedly connected an insulating sleeve (52) which serves for releasably accommodating the working utensil (170), and a cover (34) which can close the receiving container (32) and with which a safety means is associated, characterised in that disposed upstream of the air inlet openings (174) are air guide means (A) which are formed by an intermediate space (127), communicating with the atmosphere, between the bottom (50) of the receiving container (32) and the top (46) of a housing base (31), an adjoining annular space (128) between the inside wall of the sleeve-like projection (51) of the bottom (50) and regions of an adaptor (56), and by a further annular space (129) between the outside walls of the sleeve-like projection (51) and regions of the inside wall of the adaptor (56), wherein the adaptor (56) is removably arranged on the insulating sleeve (52) fixedly carried on the working utensil shaft (42) of the motor drive, and which on a portion of its peripheral surface has co-operating coupling means (60) which cooperate with coupling means (61) on the drive hub of the disc (170) (Figures 9 and 10).

5. A kitchen appliance according to claim 4 characterised in that the one-piece disc (170) is of a smooth-walled configuration on its side remote from the bottom (50) of the container while on the oppositely disposed other side it carries three ribs (172) which are of the same configuration as each other and which are at the same spacing from each other and which at their inner end blend into the drive hub (171) (Figures 11 and 12).

6. A kitchen appliance according to claim 4 and claim 5 characterised in that as considered in plan the coupling projections on the insulating sleeve (52) and the co-operating coupling means of the adaptor (56) enclose a surface which is of a corrugated configuration or in the form of a toothed wheel and which constitutes a circle, wherein the co-operating coupling means (58) of the inner portion (57) of the adaptor (56) or the coupling means (61) of the disc (170) positively engage into the dips in the corrugation configuration or the gaps between the teeth of the toothed wheel (Figures 9 to 12).

7. A kitchen appliance according to claim 4 characterised in that the disc-shaped base (54) of the insulating sleeve (52) projects into the space (127) between the bottom (50) of the receiving container (32) and the top (46) of the housing base (31) and that the air is guided (A) over the peripheral surface of the base (54) into the annular space (128).

8. A kitchen appliance according to claim 1 characterised in that the air inlet openings (21) are in the form of smooth apertures disposed in the plane of the disc (16) (Figures 13 to 15).

9. A kitchen appliance according to claim 8 characterised in that the air inlet openings (21) which are in the form of smooth apertures in the disc (16) are arranged between the ribs (19) adjoining the drive hub (15).

10. A kitchen appliance according to claim 8 or claim 9 characterised in that the disc (16) having the air inlet openings (21) which are in the form of smooth apertures has a drive hub (71) which is provided with coupling means (61) co-operating with co-operating coupling means (60), which has an adaptor which in turn is arranged removably on an inner sleeve (52) which in turn is fixedly connected to the working utensil shaft (42) driven by the motor, and which engages through a sleeve-like projection, which is open at both ends, at the bottom of the receiving container (32).

**Revendications**

1. Machine de cuisine comportant un récipient récepteur (12; 32) dans lequel est disposé de façon rotative un outil (14; 170) d'appareil ménager se présentant sous forme d'un disque comportant un moyeu d'entraînement, destiné à la préparation de crème fouettée, de blancs d'œufs en neige, de mayonnaise ou de préparations similaires, ce disque étant disposé tout près au-dessus du fond (13) du récipient présentant des canaux (20) de guidage d'air qui partent approximativement de sa zone médiane, et sont dirigés vers la périphérie du disque, lesquels sont munis dans la zone médiane du disque d'orifices (21) d'entrée d'air et dans la zone périphérique du disque, d'orifices (22) de sortie d'air et le disque (16) présentant sur son côté inférieur des nervures (19) renfermant entre elles les canaux (20) de guidage d'air et le fond (13) du récipient constituant pratiquement une face de délimitation des canaux (20) de guidage d'air, caractérisé en ce que le diamètre extérieur du disque (16) est un peu inférieur au diamètre intérieur du récipient récepteur (12), de façon telle qu'entre le disque (16) et la paroi latérale du récipient récepteur (12) soit formé un intervalle annulaire.

2. Machine de cuisine selon la revendication 1, caractérisé en ce que le disque (16) est disposé avec une inclinaison par rapport au plan perpendiculaire à l'axe longitudinal du moyeu d'entraînement (15).

3. Machine de cuisine selon la revendication 1 ou 2, caractérisé en ce qu'une zone partielle du disque (16) forme un angle vers le haut.

4. Machine de cuisine selon la revendication 1, comportant un carter (30) destiné à loger le moteur électrique ainsi que les dispositifs de commutation et de commande qui lui appartiennent, comportant un arbre (42) pour outil de travail susceptible d'être entraîné par le moteur électrique, dont l'extrémité supérieure pénètre dans une saillie (51) en forme de douille, ouverte des deux côtés, située dans le fond (50) d'un récipient récepteur (32), et sur laquelle une douille d'isolation (52) est rigidement montée, laquelle sert à recevoir de façon amovible l'outil de travail (170), comportant un couvercle (34) susceptible de fermer le récipient récepteur (32), auquel couvercle est affecté un dispositif de sécurité, caractérisé en ce que des passages d'air (A) sont installés en amont des orifices (174) d'entrée d'air, lesquels passages sont formés par un espace intermédiaire (127) en communication avec l'atmosphère, situé entre le fond (50) du récipient récepteur (32) et le couvercle (46) d'un pied de corps (31), par un espace annulaire (128) raccordé à celui-ci, situé entre la paroi intérieure de la saillie (51) en forme de douille du fond (50) et certaines zones d'un adaptateur (56), ainsi que par un autre espace annulaire (129) situé entre les parois extérieures de la saillie (51) en forme de douille et des zones de la paroi intérieure de l'adaptateur (56), l'adaptateur (56) étant disposé de façon amovible sur la douille (52) d'isolation montée rigidement sur l'arbre (42) de l'outil de travail de l'entraînement motorisé, et présentant sur une zone partielle de sa surface périphérique des accouplements complèmentaires (60) qui coopèrent avec les accouplements (61) du moyeu d'entraînement du disque (170), (figures 9 et 10).

5. Machine de cuisine selon la revendication 4, caractérisé en ce que le disque (170) monobloc conserve une paroi lisse du côté situé à l'opposé du fond (50) du récipient, tandis qu'il porte sur le côté opposé trois nervures (172) de même forme et présentant le même écart entre elles, qui se raccordent à leur extrémité intérieure au moyeu d'entraînement (171), (figures 11 et 12).

6. Machine de cuisine selon les revendications 4 et 5, caractérisé en ce qu'en vue de dessus, les saillies d'accouplement de la douille d'isolation (52) et les saillies opposées de l'adaptateur (56), constituent une surface de forme ondulée ou en forme de roue dentée qui se complète pour former un cercle, les accouplements complémentaires (58) de la partie intérieure (57) de l'adaptateur (56) et respectivement les accouplements (61) du disque (170) pénètrent dans les creux entre les ondulations ou respectivement dans les intervalles entre les dents selon un ajustement de forme (figures 9 à 12).

7. Machine de cuisine selon la revendication 4, caractérisé en ce que dans l'espace intermédiaire (127) entre le fond (50) du récipient récepteur (32) et le dessus (46) du pied de corps (31), dépasse le pied (54) en forme de disque de la douille (52) d'isolation et en ce que le passage de l'air (A) dans l'espace annulaire (128) s'effectue au-dessus de la surface périphérique du pied (54).

8. Machine de cuisine selon la revendication 1, caractérisé en ce que les orifices (21) d'entrée d'air se présentent sous la forme d'ouvertures lisses situées dans le plan du disque (16), (figures 13 à 15).

9. Machine de cuisine selon la revendication 8, caractérisé en ce que les orifices (12) d'entrée d'air formés par des ouvertures lisses pratiquées dans le disque (16) sont disposés entre les nervures (19) à proximité du moyeu d'entraînement (15).

10. Machine de cuisine selon la revendication 8 ou 9, caractérisé en ce que le disque (16) présentant les orifices (21) d'entrée d'air formés par des ouvertures lisses, comporte un moyeu d'entraînement (71), qui est muni d'accouplements (61), coopérant avec des accouplements complémentaires (60), et qui présente un adaptateur, disposé lui-même de façon amovible sur une douille intérieure (52) qui elle-même est montée rigidement sur l'arbre (42) de l'outil de travail entraîné par le moteur et qui passe dans une saillie en forme de douille ouverte des deux côtés, située sur le fond du récipient récepteur (32).

*FIG.1*

*FIG.2*

FIG.3

*19*  *22*  *19*  *15*

*21*  *21*

*18*

*20*  *22*

*16*

*14*

*20*

*21*

*19*  *22*

*21*  *23*  *21*  *23*

*19*  *20*  *19*  *20*

FIG.5

*20*

*19*  *21*  *16*

FIG.4

*23*

*19*  *15*

*17*

*14*

*V*  *V*

*19*  *19*

*20*

FIG.6

FIG.7

FIG.8

FIG.9

EP 0 137 136 B1

FIG.10

FIG.11

FIG.12

EP 0 137 136 B1

FIG.13

FIG.14

FIG.15

25

*FIG.16*

56

59

60

70

72

*FIG.17*

74

72

73

71

61

70

101